# EUROPÄISCHE PATENTANMELDUNG

(11) **EP 4 686 397 A1**
(43) Veröffentlichungstag der Anmeldung: **04.02.2026**
(21) Anmeldenummer: 25192653.1
(22) Anmeldetag: 29.07.2025
(51) Int. Cl.: A01D 78/10

(54) **VERFAHREN UND STEUERGERÄT ZUM BETREIBEN EINER RECHKREISEL-AUSHUBSTEUERUNG FÜR MEHRKREISELSCHWADER**

(30) Priorität: 01.08.2024 DE 102024121913
(71) Anmelder: CLAAS Saulgau GmbH, 88348 Bad Saulgau (DE)
(72) Erfinder: SPIELER, Raphael, 88339 Bad Waldsee (DE); FENSTERLE, Matthias, 88521 Ertingen (DE); MOCK, Andreas, 88284 Wolpertswende (DE)

(57) **Zusammenfassung**

Verfahren und Steuergerät zum Betreiben einer Rechkreisel-Aushubsteuerung für Mehrkreiselschwader (11) mit wenigstens vier an Auslegerarmen (16, 17, 18, 19) angelenkten Schwadkreiseln (12, 13, 14, 15), wobei die Auslegerarme an einem Rahmen (20) angelenkt sind, und wobei die Schwadkreisel über die Auslegerarme (16, 17, 18, 19) relativ zum Rahmen (20) anhebbar und absenkbar sind, wobei die Auslegerarme und die Schwadkreisel abhängig von einem jeweiligen Steuerungssignal individuell zwischen einer Arbeitsstellung und einer Transportstellung oder Zwischenstellung überführbar sind. Ein Schwadkreisel (12, 13), der von mindestens einem vor demselben und weiter außen angeordneten Schwadkreisel (14, 15) zusammengerechtes Erntegut weiter zusammenrecht, wird nur dann abhängig von einem Steuerungssignal in seine Transportstellung oder Zwischenstellung überführt, wenn auch der mindestens eine vor demselben und weiter außen angeordnete Schwadkreisel (14, 15) in seine Transportstellung oder Zwischenstellung überführt wird oder ist. Ein Schwadkreisel (14, 15), dessen zusammengerechtes Erntegut von einem hinter demselben und weiter innen angeordneten Schwadkreisel (12, 13) weiter zusammengerecht wird, wird abhängig von einem Steuerungssignal in seine Arbeitsstellung überführt, und auch der mindestens eine hinter demselben und weiter innen angeordnete Schwadkreisel (12, 13) wird in seine jeweilige Arbeitsstellung überführt.

## Beschreibung

Die Erfindung betrifft ein Verfahren zum Betreiben einer Rechkreisel-Aushubsteuerung für Mehrkreiselschwader nach dem Oberbegriff des Anspruchs 1. Des Weiteren betrifft die Erfindung ein Steuergerät zur Durchführung des Verfahrens.

EP 2 436 252 B1 offenbart ein Verfahren zum Betreiben einer Rechkreisel-Aushubsteuerung für Mehrkreiselschwader mit wenigstens vier umlaufend angetriebenen, an Auslegerarmen angelenkten Schwadkreiseln. Die Auslegerarme, an welchen die Schwadkreisel angelenkt sind, sind ihrerseits an einem Rahmen des Mehrkreiselschwaders angelenkt, wobei die Schwadkreisel über die Auslegerarme relativ zum Rahmen angehoben und abgesenkt werden können, um die Schwadkreisel zwischen einer Arbeitsstellung und einer Transportstellung oder Zwischenstellung zu überführen. In der Arbeitsstellung sind die Schwadkreisel über Tast- und Stützräder des Mehrkreiselschwaders am Boden abgestützt und rechen auf dem Boden liegendes Erntegut zusammen. In der Transportstellung oder Zwischenstellung der Schwadkreisel sind dieselben hingegen vom Boden abgehoben und rechen das auf dem Boden liegende Erntegut nicht zusammen.

EP 2 436 252 B1 offenbart die Ansteuerung der Auslegerarme zur Überführung der Schwadkreisel zwischen der Arbeitsstellung und der Transportstellung oder Zwischenstellung abhängig von einem Steuerungssignal, das auf GPS-Daten beruht. In einem ersten Schritt werden GPS-Koordinaten einer Feldkontur in einer ersten Umrundungsfahrt aufgezeichnet und gespeichert, wobei in einem weiteren Schritt die Kontur einer noch zu bearbeitenden Fläche errechnet wird und abhängig hiervon Befehle und damit Steuerungssignale zum Absenken oder Anheben der Schwadkreisel generiert werden, also Steuerungssignale zur Überführung der Schwadkreisel zwischen der Arbeitsstellung und der Transportstellung oder Zwischenstellung.

Dann, wenn die Ansteuerung der Auslegerarme zur Überführung der Schwadkreisel zwischen der jeweiligen Arbeitsstellung und der jeweiligen Transportstellung oder Zwischenstellung alleine auf Grundlage von GPS-Daten erfolgt, kann sich eine Betriebssituation einstellen, in welcher ein Schwadkreisel, der von einem vor demselben angeordneten Schwadkreisel zusammengerechtes Erntegut weiter zusammenrecht, in eine Transportstellung oder Zwischenstellung überführt wird, während der in Zugrichtung vor demselben angeordnete Schwadkreisel sich noch in der Arbeitsstellung befindet. In diesem Fall werden dann ungewollte Parallelschwade gebildet, die beim nachfolgenden Aufnehmen eines Schwads, zum Beispiel mit Hilfe eines Ladewagens, nicht ordnungsgemäß vom Boden aufgenommen werden können.

Aufgabe der Erfindung ist es, ein Verfahren zum Betreiben einer Rechkreisel-Aushubsteuerung für Mehrkreiselschwader und ein Steuergerät zur Durchführung des Verfahrens bereitzustellen, mit Hilfe derer die Ausbildung solcher ungewollte Parallelschwade verhindert werden können.

Diese Aufgabe wird durch ein Verfahren nach Anspruch 1 und ein Steuergerät nach Anspruch 3 gelöst.

Erfindungsgemäß wird ein Schwadkreisel, der von mindestens einem vor demselben und bezogen auf den Rahmen weiter außen angeordneten Schwadkreisel zusammengerechtes Erntegut weiter zusammenrecht, nur dann durch Anheben des jeweiligen Auslegerarms in seine jeweilige Transportstellung oder Zwischenstellung überführt, wenn auch der mindestens eine vor demselben und bezogen auf den Rahmen weiter außen angeordnete Schwadkreisel in seine jeweilige Transportstellung oder Zwischenstellung überführt wird oder ist.

Alternativ oder zusätzlich wird dann, wenn ein Schwadkreisel, dessen zusammengerechtes Erntegut von einem hinter demselben und bezogen auf den Rahmen weiter innen angeordneten Schwadkreisel weiter zusammengerecht wird, durch Absenken des jeweiligen Auslegerarms in seine jeweilige Arbeitsstellung überführt wird, automatisch auch der mindestens eine hinter demselben und bezogen auf den Rahmen weiter innen angeordnete Schwadkreisel in seine jeweilige Arbeitsstellung überführt, sofern dieser sich nicht bereits in seiner Arbeitsstellung befindet.

Mit der hier vorliegenden Erfindung wird vorgeschlagen, dass auf Basis eines Steuerungssignals das Überführen eines Schwadkreisels in seine jeweilige Transportstellung oder Zwischenstellung oder auch das Überführen eines Schwadkreisels in seine Arbeitsstellung auch abhängig davon erfolgt, welche Stellung ein diesem Schwadkreisel vorgelagerter einnimmt. So kann vermieden werden, dass sich im Betrieb auf einem zu bearbeitenden Boden ungewollte Parallelschwade ausbilden, die nachfolgend über einen Ladewagen nicht ordnungsgemäß vom Boden aufgenommen werden können.

Vorzugsweise beruht das jeweilige Steuerungssignal, in Abhängigkeit dessen ein Auslegerarm und damit der an dem jeweiligen Auslegerarm angelenkte Schwadkreisel durch Anheben in die Transportstellung oder Zwischenstellung überführt wird, auf GPS-Daten. Die Erfindung kommt insbesondere dann zum Einsatz, wenn das Steuersignal, auf Basis dessen ein Schwadkreisel zwischen einer Arbeitsstellung und einer Transportstellung oder Zwischenstellung überführt wird, auf GPS-Daten beruht. In diesem Fall wird dann ein auf GPS-Daten beruhendes Steuerungssignal abhängig vom Zusammenwirken der jeweiligen anzuhebenden oder abzusenkenden Schwadkreisels mit einem anderen Schwadkreisel ausgeführt oder nicht ausgeführt. So kann auf besonders vorteilhafte Art und Weise die Ausbildung ungewollter Parallelschwade vermieden werden.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. Dabei zeigt:

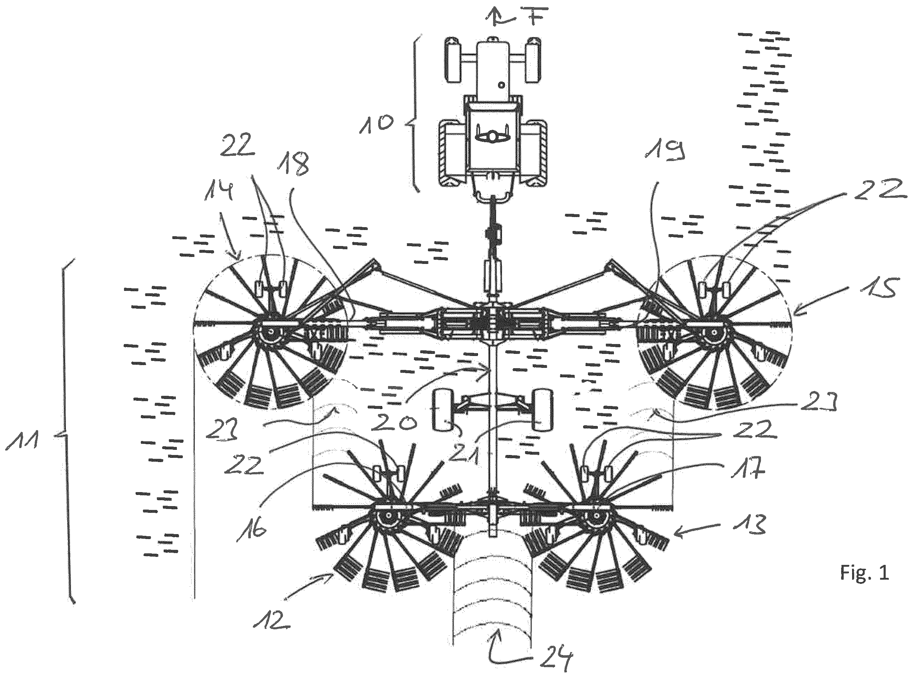

- Fig. 1: eine Draufsicht auf einen von einem Zugfahrzeug gezogenen Mehrkreiselschwader für Verdeutlichung der Erfindung.

Fig. 1 zeigt eine Anordnung aus einem Zugfahrzeug 10 und einem von dem Zugfahrzeug 10 gezogenen Mehrkreiselschwader 11. Das Zugfahrzeug 10 bewegt sich in Fortbewegungsrichtung F, die der Zugrichtung des Mehrkreiselschwaders 11 entspricht.

Im gezeigten Ausführungsbeispiel weist der Mehrkreiselschwader 11 vier umlaufend angetriebene Schwadkreisel 12, 13, 14 und 15 auf. Jeder Schwadkreisel 12, 13, 14 und 15 ist an einem Auslegerarm 16, 17, 18, 19 angelenkt, wobei die Auslegerarme 16, 17, 18, 19 ihrerseits an einem Rahmen 20 des Mehrkreiselschwaders 11 angelenkt sind. Die Auslegerarme 16, 17, 18, 19 sind relativ zum Rahmen 20 anhebbar und absenkbar, um hierdurch auch die Schwadkreisel 12, 13, 14 und 15 anzuheben und abzusenken. Es können auch mehr als vier, insbesondere sechs, Schwadkreisel vorhanden sein.

In Fig. 1 sind Fahrwerksräder 21 eines Fahrwerks gezeigt, über welchen sich der Mehrkreiselschwader 11 bei der Fortbewegung auf einem Boden abstützt. Ferner sind in Fig. 1 den einzelnen Schwadkreiseln 12, 13, 14 und 15 zugeordnete Tast- und Stützräder 22 gezeigt. Dann, wenn die Schwadkreisel 12, 13, 14 und 15 eine Arbeitsstellung einnehmen, stützt sich der jeweilige Schwadkreisel 12, 13, 14, 15 über seine jeweiligen Tast- und Stützräder auf einem Boden ab und recht auf dem Boden liegendes Erntegut zusammen. Durch Anheben der Auslegerarme 16, 17, 18, 19 kann beim Mehrkreiselschwader 11 der Fig. 1 jeder Schwadkreisel 12, 13, 14, 15 individuell von der Arbeitsposition in eine Transportstellung oder Zwischenstellung überführt werden, in welcher der jeweilige Schwadkreisel 12, 13, 14, 15 vom Boden abgehoben ist, wobei ein vom Boden abgehobener Schwadkreisel 12, 13, 14, 15 das am Boden liegende Erntegut nicht zusammenrecht.

Der Mehrkreiselschwader 11 der Fig. 1 weist in Zugrichtung F gesehen hintere Schwadkreisel 12, 13 auf, die bezogen auf den Rahmen 20 weiter innen positioniert sind, ebenso die in Zugrichtung F gesehen weiter vorne positionierten Schwadkreisel 14, 15, die bezogen auf den Rahmen 20 des Mehrkreiselschwaders 11 weiter außen angeordnet sind. Die auf einer jeweiligen Seite des Rahmens 20 angeordneten Schwadkreisel 12 und 14 sowie 13 und 15 wirken jeweils derart zusammen, dass in Zugrichtung F des Mehrkreiselschwaders 11 gesehen weiter vorne angeordnete Schwadkreisel 14, 15 Erntegut unter Bildung von Teilschwaden 23 zunächst nach innen rechen, wobei nachfolgend die bezogen auf die Zugrichtung F hinter diesen Schwadkreiseln 14, 15 angeordneten hinteren Schwadkreisel 12, 13 diese Teilschwade 23 weiter zusammenrechen und weiter nach innen fördern, um letztendlich einen mittigen Schwad 24 auszubilden.

Dann, wenn zum Beispiel der Schwadkreisel 12 in seine Transportstellung oder Zwischenstellung überführt ist, in welcher derselbe kein Erntegut mehr zusammenrecht, der Schwadkreisel 14 jedoch noch in der Arbeitsstellung ist, so wird der vom Schwadkreisel 14 ausgebildete Teilschwad 23 nicht weiter zusammengerecht, sodass sich dann ungewollte Parallelschwade ausbilden können, die nicht ordnungsgemäß von einem Ladewagen aufgenommen werden können.

Wie ausgeführt, kann jeder der Schwadkreisel 12, 13, 14, 15 abhängig von einem jeweiligen Steuerungssignal über den jeweiligen Auslegerarme 16, 17, 18, 19 individuell zwischen seiner jeweiligen Arbeitsstellung und seiner jeweiligen Transportstellung oder Zwischenstellung überführt werden. Dies erfolgt vorzugsweise abhängig von GPS-Daten, die einem Steuergerät des Mehrkreiselschwaders 11 von einem GPS-Sender zur Verfügung gestellt werden. Wie bereits ausgeführt, kann sich hierbei grundsätzlich eine Situation ausbilden, in welcher abhängig von solchen Steuerungssignalen mindestens einer der hinteren Schwadkreisel 12, 13 eine Transport- oder Zwischenstellung einnimmt, während mindestens einer der vorderen Schwadkreisel 14, 15 eine Arbeitsstellung einnimmt. Dies ist von Nachteil, da sich dann ungewollte Parallelschwade ausbilden können.

Mit der hier vorliegenden Erfindung wird vorgeschlagen, dass ein Schwadkreisel 12, 13, der von mindestens einem vor demselben und bezogen auf den Rahmen 20 weiter außen angeordneten Schwadkreisel 12, 15 zusammengerechtes Erntegut weiter zusammenrecht, nur dann abhängig von einem jeweiligen Steuerungssignal, welches zum Beispiel auf GPS-Daten beruht, durch Anheben des jeweiligen Auslegerarms 16, 17 in seine jeweilige Transportstellung oder Zwischenstellung überführt wird, wenn auch der mindestens eine vor demselben und bezogen auf den Rahmen 20 weiter außen angeordnete Schwadkreisel 14, 15 in seine jeweilige Transportstellung oder Zwischenstellung überführt wird oder überführt ist. Dies bedeutet, dass in Fig. 1 der hintere Schwadkreisel 12 ausgehend von seiner Arbeitsstellung nur dann in seine Transportstellung oder Zwischenstellung abhängig von einem zum Beispiel auf GPS-Daten beruhenden Steuerungssignal überführt wird, wenn auch der vor demselben angeordnete Schwadkreisel 14 in die Transportstellung oder Zwischenstellung überführt wird oder bereits überführt ist.

Ferner kann vorgesehen sein, dass dann, wenn ein Schwadkreisel 14, 15, dessen zusammengerechtes Erntegut von einem hinter demselben und bezogen auf den Rahmen 20 weiter innen angeordneten Schwadkreisel 12, 13 weiter zusammengerecht wird, abhängig von einem jeweiligen Steuerungssignal, welches zum Beispiel auf GPS-Daten beruht, durch Absenken des jeweiligen Auslegerarms 18, 19 in seine jeweilige Arbeitsstellung überführt wird, automatisch auch der mindestens eine hinter demselben und bezogen auf den Rahmen 20 weiter innen angeordnete Schwadkreisel 12, 13 in seine Arbeitsstellung überführt wird, falls er sich nicht bereits dort befindet. In Fig. 1 bedeutet dies, dass zum Beispiel der Schwadkreisel 15 nur dann auf Basis eines jeweiligen Steuerungssignals in die Arbeitsstellung abgesenkt wird, wenn auch der hinter demselben angeordnete Schwadkreisel 13 in die Arbeitsstellung abgesenkt wird oder bereits die Arbeitsstellung einnimmt.

Mit der Erfindung kann vermieden werden, dass sich im Betrieb eines Mehrkreiselschwaders 11 unerwünschte Parallelschwade ausbilden, die in einem späteren Bodenbearbeitungsprozess über einen Transportwagen nicht ordnungsgemäß aufgenommen werden können.

Die Erfindung betrifft weiterhin ein Steuergerät, welches eingerichtet ist, das oben beschriebene Verfahren automatisch auszuführen. Bei diesem Steuergerät handelt es sich insbesondere um ein elektronisches Steuergerät, welches über hardwareseitige und softwareseitige Mittel zur Durchführung des erfindungsgemäßen Verfahrens verfügt.

Zu den hardwareseitigen Mitteln zählen zum Beispiel Datenschnittstellen, um mit den an der Ausführung des erfindungsgemäßen Verfahrens beteiligten Baugruppen Daten auszutauschen, so zum Beispiel mit einem GPS-Sender sowie mit Antrieben, die der Verlagerung der Auslegerarme 16, 17, 18, 19 relativ zum Rahmen 20 und so letztendlich der Überführung der Schwadkreisel 12, 13, 14, 15 zwischen ihrer Arbeitsstellung und ihrer Transport- oder Zwischenstellung dienen. Ferner zählen zu den hardwareseitigen Mitteln ein Prozessor zur Datenverarbeitung und ein Speicher zur Datenspeicherung.

Zu den softwareseitigen Mitteln zählen Programmbausteine, die im Steuergerät zur Durchführung des erfindungsgemäßen Verfahrens implementiert sind.

Das Steuergerät ist eingerichtet, einen Schwadkreisel 12, 13, der von mindestens einem vor demselben und bezogen auf den Rahmen 20 weiter außen angeordneten Schwadkreisel 14, 15 zusammengerechtes Erntegut weiter zusammenrecht, nur dann abhängig von einem jeweiligen insbesondere auf GPS-Daten beruhenden Steuerungssignal durch Anheben des jeweiligen Auslegerarms 16, 17 in eine jeweilige Transport- oder Zwischenstellung zu überführen, wenn auch der mindestens eine vor demselben und bezogen auf den Rahmen 20 weiter außen angeordnete Schwadkreisel 14, 15 in seine jeweilige Transport- oder Zwischenstellung überführt wird oder ist.

Ferner ist das Steuergerät eingerichtet, einen Schwadkreisel 14, 15, dessen zusammengerechtes Erntegut von einem hinter demselben und bezogen auf den Rahmen 20 weiter innen angeordneten Schwadkreisel 12, 13 weiter zusammengerecht wird, abhängig von einem jeweiligen Steuerungssignal, welches insbesondere auf GPS-Daten beruht, durch Absenken des jeweiligen Auslegerarms 18, 19 in seine jeweilige Arbeitsstellung zu überführen, und dann auch den mindestens einen oder alle hinter demselben und bezogen auf den Rahmen 20 weiter innen angeordnete Schwadkreisel 12, 13 in seine bzw. ihre jeweilige Arbeitsstellung zu überführen, sofern er bzw. sie sich nicht bereits dort befinden.

Mit der Erfindung ist es möglich, die Ausbildung ungewollter Parallelschwade zu vermeiden, um so sicherzustellen, dass auf einem Boden abgelegte Schwade zuverlässig mit Hilfe zum Beispiel eines Ladewagens aufgenommen werden können.

### Bezugszeichenliste

- 10: Zugfahrzeug
- 11: Mehrkreiselschwader
- 12: Schwadkreisel
- 13: Schwadkreisel
- 14: Schwadkreisel
- 15: Schwadkreisel
- 16: Auslegerarm
- 17: Auslegerarm
- 18: Auslegerarm
- 19: Auslegerarm
- 20: Rahmen
- 21: Fahrwerksrad
- 22: Tast- und Stützrad
- 23: Teilschwad
- 24: Schwad

## Patentansprüche

1. Verfahren zum Betreiben einer Rechkreisel-Aushubsteuerung für Mehrkreiselschwader (11) mit wenigstens vier umlaufend angetriebenen, an Auslegerarmen (16, 17, 18, 19) angelenkten Schwadkreiseln (12, 13, 14, 15), wobei die Auslegerarme (16, 17, 18, 19) an einem Rahmen (20) des Mehrkreiselschwaders (11) angelenkt sind, und wobei die Schwadkreisel (12, 13, 14, 15) über die Auslegerarme relativ zum Rahmen (20) anhebbar und absenkbar sind,
wobei die Schwadkreisel (12, 13, 14, 15) in einer Arbeitsstellung am Boden liegendes Erntegut zusammenrechen,
wobei die Schwadkreisel (12, 13, 14, 15) durch Anheben der Auslegerarme (16, 17, 18, 19) gegenüber dem Rahmen (20) vom Boden abgehoben und in eine Transportstellung oder Zwischenstellung überführt werden, in welcher der jeweilige Schwadkreisel (12, 13, 14, 15) am Boden liegendes Erntegut nicht zusammenrecht,
wobei mindestens zwei Schwadkreisel (12, 13) von jeweils mindestens einem in Zugrichtung des Mehrkreiselschwaders (11) vor dem jeweiligen Schwadkreisel (12, 13) und bezogen auf den Rahmen (20) weiter außen angeordneten Schwadkreisel (14, 15) zusammengerechtes Erntegut weiter zusammenrechen,
wobei die Auslegerarme (16, 17, 18, 19) und damit die an den Auslegerarmen (16, 17, 18, 19) angelenkten Schwadkreisel (12, 13, 14, 15) abhängig von einem jeweiligen Steuerungssignal individuell zwischen einer jeweiligen Arbeitsstellung und einer jeweiligen Transportstellung oder Zwischenstellung überführt werden, **dadurch gekennzeichnet, dass**
ein Schwadkreisel (12, 13), der von mindestens einem vor demselben und bezogen auf den Rahmen (20) weiter außen angeordneten Schwadkreisel (14, 15) zusammengerechtes Erntegut weiter zusammenrecht, nur dann abhängig von einem jeweiligen Steuerungssignal in seine jeweilige Transportstellung oder Zwischenstellung überführt wird, wenn auch der mindestens eine vor demselben und bezogen auf den Rahmen (20) weiter außen angeordnete Schwadkreisel (14, 15) in seine jeweilige Transportstellung oder Zwischenstellung überführt wird oder ist, und/oder
ein Schwadkreisel (14, 15), dessen zusammengerechtes Erntegut von einem hinter demselben und bezogen auf den Rahmen (20) weiter innen angeordneten Schwadkreisel (12, 13) weiter zusammengerecht wird, abhängig von einem jeweiligen Steuerungssignal in seine jeweilige Arbeitsstellung überführt wird, und auch der mindestens eine hinter demselben und bezogen auf den Rahmen (20) weiter innen angeordnete Schwadkreisel (12, 13) in seine jeweilige Arbeitsstellung überführt wird.

2. Verfahren (10) nach Anspruch 1, **dadurch gekennzeichnet, dass** das jeweilige Steuerungssignal, in Abhängigkeit dessen ein Auslegerarm (16, 17, 18, 19) und damit der an dem jeweiligen Auslegerarm (16, 17, 18, 19) angelenkte Schwadkreisel (12, 13, 14, 15) durch Anheben in die Transportstellung oder Zwischenstellung überführt wird, auf GPS-Daten beruht.

3. Steuergerät zum Betreiben einer Rechkreisel-Aushubsteuerung für Mehrkreiselschwader (11) mit wenigstens vier umlaufend angetriebenen, an Auslegerarmen (16, 17, 18, 19) angelenkten Schwadkreiseln (12, 13, 14, 15), wobei die Auslegerarme (16, 17, 18, 19) an einem Rahmen (20) des Mehrkreiselschwaders (11) angelenkt sind, und wobei die Schwadkreisel (12, 13, 14, 15) über die Auslegerarme (16, 17, 18, 19) relativ zum Rahmen (20) anhebbar und absenkbar sind, wobei das Steuergerät eingerichtet ist, die Auslegerarme (16, 17, 18, 19) und damit die an den Auslegerarmen (16, 17, 18, 19) angelenkten Schwadkreisel (12, 13, 14, 15) abhängig von einem jeweiligen Steuerungssignal individuell zwischen einer jeweiligen Arbeitsstellung und einer jeweiligen Transportstellung oder Zwischenstellung zu überführen, **dadurch gekennzeichnet, dass**
das Steuergerät eingerichtet ist, einen Schwadkreisel (12, 13), der von mindestens einem vor demselben und bezogen auf den Rahmen (20) weiter außen angeordneten Schwadkreisel (14, 15) zusammengerechtes Erntegut weiter zusammenrecht, nur dann abhängig von einem jeweiligen Steuerungssignal in seine jeweilige Transportstellung oder Zwischenstellung zu überführen, wenn auch der mindestens eine vor demselben und bezogen auf den Rahmen (20) weiter außen angeordnete Schwadkreisel (14, 15) in seine jeweilige Transportstellung oder Zwischenstellung überführt wird oder ist, und/oder
das Steuergerät eingerichtet ist, einen Schwadkreisel (14, 15), dessen zusammengerechtes Erntegut von einem hinter demselben und bezogen auf den Rahmen (20) weiter innen angeordneten Schwadkreisel (12, 13) weiter zusammengerecht wird, abhängig von einem jeweiligen Steuerungssignal in seine jeweilige Arbeitsstellung zu überführen, und auch den mindestens einen hinter demselben und bezogen auf den Rahmen (20) weiter innen angeordneten Schwadkreisel (12, 13) in seine jeweilige Arbeitsstellung zu überführen.

4. Steuergerät nach Anspruch 3, **dadurch gekennzeichnet, dass** das Steuergerät eingerichtet ist, das jeweilige Steuerungssignal, in Abhängigkeit dessen ein Auslegerarm (16, 17, 18, 19) und damit der an dem jeweiligen Auslegerarm (16, 17, 18, 19) angelenkte Schwadkreisel (12, 13, 14, 15) durch Anheben in die Transportstellung oder Zwischenstellung überführt wird, auf Basis von GPS-Daten zu ermitteln.
